# EUROPEAN PATENT SPECIFICATION

(11) **EP 0 418 583 B1**
(45) Date of publication and mention of the grant of the patent: **25.10.1995**
(21) Application number: 90116157.0
(22) Date of filing: 23.08.1990
(51) Int. Cl.: G02B 27/22, H04N 13/04

(54) **Real time three dimensional display**
Dreidimensionale Echtzeitdarstellung
Affichage tridimensionnel en temps réel

(30) Priority: 19.09.1989 US 409176
(43) Date of publication of application: 27.03.1991
(73) Proprietor: TEXAS INSTRUMENTS INCORPORATED, Dallas Texas 75265 (US)
(72) Inventor: Garcia, Felix, Round Rock, Texas 78664 (US); Williams, Rodney D., Plano, Texas 75075 (US)
(74) Representative: Leiser, Gottfried, Dipl.-Ing.

(56) References cited:
- EP-A- 0 310 928
- DE-A- 2 830 115
- US-A- 3 097 261
- US-A- 3 970 361
- IBM TECHNICAL DISCLOSURE BULLETIN, vol 29, no 10, March 1987, p. 4326, Armonk, NY, US; "Two- and Three-Dimensional IMAGE Display".

## Description

### BACKGROUND OF THE INVENTION

### FIELD OF THE INVENTION

This invention relates to a three dimensional display system as defined in the precharacterizing part of claim 1, more specifically, to a system capable of displaying images in three dimensions which are projected onto a screen in two dimensions.

### BRIEF DESCRIPTION OF THE PRIOR ART

A display system of this type is disclosed in EP-A-310 928.

It has been known in the prior art to modulate or scan a beam, such as a laser beam and then to project the scanned beam onto a screen. Examples of such systems are set forth in Baker Patent Nos. 3,471,641 and 3,549,800.

It has also been long desired to provide a three dimensional display. Prior art systems for creating such a display have involved moving a flat plate mirror or flexing a plastic mirror to reflect a CRT image to create a volume display. Similar techniques have employed a Mylar membrane stretched over a metal ring and silvered on the from surface, such mirror being vibrated to reflect the information displayed on the CRT in synchronism with the mirror motion. Such techniques and techniques for converting a cathode ray tube two dimensional display into a three dimensional image are discussed in the article "Terminal Puts 3-Dimensional Graphics on Solid Ground", by Harry S. Stover, Electronics, July 28, 1981.

Prior art three dimensional display techniques were limited because of their use with CRT screens in that the produced image may be viewed only from selected angles. Moreover, such prior art systems have generally not been able to produce real time images and have been limited in the possible vibration frequencies of the screens. Moreover, the use of vibrating mirrors has created difficulties due to the relatively large mass of the mirrors which prevent substantial deflections. For example, such prior art systems have generally been capable of providing a mirror displacement of about 0.4 millimeters.

A need thus arose for a simple and economical three dimensional display system that could produce substantial displacement at a variety of frequencies in order to provide three dimensional images which can be view from all angles. Patent Nos. 1,794,103, 3,682,553 and 3,970,361 set forth typical prior art displays of the above noted type. Such prior art systems were generally limited as to the size of the image displayed and is affected by G forces, thereby presenting problems in environments were G forces exist, such as in aircraft.

The above noted problems of the prior art were minimized and there was provided a three dimensional display system which was not substantially affected by G forces and wherein the size of the displayed image and screen is determined by the size of a disk and motor. This system is set forth in the above cited EP-A-310 928. The system disclosed therein can be used, for example, in business and industry uses, such as solid animation, radar display, molecular research, resonant frequency and harmonics display, military, computer graphics and the like.

The system in accordance with a first embodiment thereof includes a disk-like screen connected to the end of a motor shaft. The disk is attached to the shaft of a motor at a 45 degree angle, though this angle can be varied to provide a larger or smaller height or z-axis dimension, so that, as the disk rotates, a displacement of any given point thereon along the z axis takes place. The image is formed on the screen by projecting a light beam, such as from a laser, through a modulator and toward a scanner which produces an x-y scan of the beam on a screen, the screen therein being the disk discussed hereinabove. The disk can be translucent, such as lucite, so that images can be projected thereon onto the front and/or rear surfaces thereof. The modulation or strobing of the scan is then synchronized with the rotating disk by control of the motor speed so that a three dimensional pattern appears on the screen. It can be seen that any point on the x-y scan from the scanner which impinges upon the screen will move along a z-axis direction since the screen or disk at that point produces such z-axis movement. This movement of the displayed image provides the three dimensional effect. The adjustment of the angle between the disk surface and the x-y plane of the scanned x-y image will determine the z-dimension or height of the three dimensional image, the disk angle being adjustable on-line, if so desired.

While the above described prior art provides a surprisingly realistic real time three dimensional display, it is readily apparent that two conical areas extending upwardly and downwardly from the axis of rotation of the screen are incapable of receiving a portion of the display. In addition, the display cannot appear along the center point of rotation since the display does not move along the axis at this point. A still further problem is that of altering the angle of the disk easily or on-line to alter the volume traversed by the disk during rotation to control the volume displaced by the display. A yet further problem with the cited prior art is that an observer cannot simultaneously view the three dimensional display as well as a separate two dimensional display superimposed thereon.

### SUMMARY OF THE INVENTION

In accordance with the present invention, the above noted problems of the prior art are minimized and there are provided improvements in the above described prior art to minimize the problems therein as set forth hereinabove.

Briefly, in accordance with one embodiment of the present invention, there is provided a display system as defined in the precharacterizing part of claim, further including a second disk which intersects the first disk preferably at right angles or at an acute angle along a line on the surface of the first disk. A straight line through the center of the first disk and at an acute angle to the axis of rotation of the first disk is the preferred such line. The second disk can take other shapes, such as, but not limited to, rectangular, oval, triangular, etc. The first and second disks can be enclosed in a solid clear material, preferably but limited to a spherical shape so that the enclosure with disks therein can be rotated from the exterior of the enclosure. Alternatively, a rotating shaft of the type set forth in the above noted pending application and secured to the first disk can be used. The above described embodiment in the enclosure can be provided with two degrees of rotation by providing a pair of driving members for driving the enclosure in different directions simultaneously or at different times. In this arrangement, the enclosure would be secured against movements other than rotation about its center point in at least two directions and preferably in all directions.

### BRIEF DESCRIPTION OF THE DRAWINGS

FIGURE 1 is a schematic diagram of a three dimensional display system utilizing a screen in accordance with a first version of a first embodiment of the present invention;
FIGURE 2 is a circuit diagram showing synchronization of the scanner with the rotation of the display screen in accordance with the present invention; and
FIGURE 3 is a schematic diagram of a system for rotation of a second version of the display of the first embodiment in two different directions.

### DESCRIPTION OF THE PREFERRED EMBODIMENTS

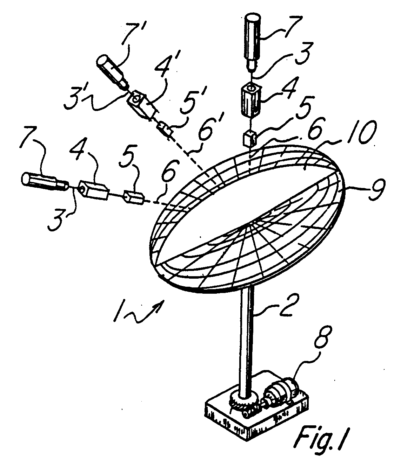

Referring now to FIGURE 1, there is shown a schematic diagram of a system in accordance with a first version of the present invention. The system includes a first light source comprising a laser 7 which projects a light beam through a modulator 4 onto an x-y scanner 5. The modulator 4 is externally controlled in predetermined manner (not shown) to control the intensity of the laser light beam 3 passing therethrough. It is understood that the light intensity can be controlled so that no light passes through, when so desired. The x-y scanner 5, whose scanning rate is externally controllable in standard manner (not shown), scans the light beam 3 from the modulator 4 along an x-y plane and projects this x-y image 6 onto a screen 1 in the form of a pair of intersecting disks as will be explained hereinbelow. All of the structure described to this point except for the particular screen 1 is well known and described in the above noted prior art and elsewhere.

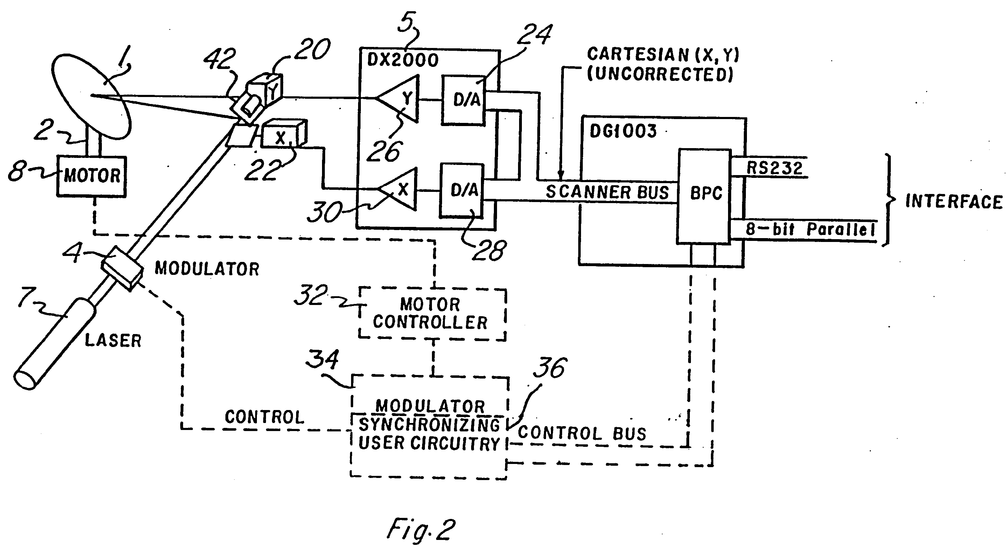

The screen 1 is rotated by a motor 8 via a shaft motor 2, the motor speed being controllable by means of a controller (not shown). The motor speed is preferably synchronized with the scanning rate of the scanner 5. One typical circuit for providing such synchronization is shown in FIGURE 2 so that the same spot on the screen is always present to receive a particular part of the x-y scan projected thereon. The circuit of FIGURE 2 will be explained hereinbelow.

The screen 1 is formed from a pair of intersecting light receiving disk-shaped members 9 and 10 and can be formed from a standard type movie screen material, such as a lenticular screen, if it is to be viewed from only one side thereof, as for the system described herein thus far. The angle of the disk-shaped member 9 with respect to the image received from the scanner is preferably 45 degrees. However, this angle can be altered about 45 degrees in either direction, the effect of such angle alteration being to vary the height or z-dimension of the displayed image with continued change in such angle. The screen angle is variable on line, if so desired, by a structure (not shown). The second disk-shaped member 10 is intersects the member 9 preferably normal thereto, though other angles of intersection can be used and can be, as shown in FIGURE 1, a sector of a disk. The member 10 is useful to receive light from a scanner or point source which is positioned off of the axis of the shaft 2 and is preferably utilized to receive such light from a second light source, such as, for example, a source similar to the one described hereinabove and composed of laser 7′, modulator 4′ and scanner 5′ this source being capable of operating concurrently with the laser 7, modulator 4 and scanner 5 or independently therefrom.

Referring now to FIGURE 2, wherein like reference numerals refer to like structure as in FIGURE 1, the scanner 5 is controlled by signals on the scanner bus which are derived from the control bus. The signals on the control bus are provided by the synchronizing user circuitry which can be manually controlled, such as by the control input thereto. The circuitry 36 also controls the motor controller 32 to control the speed of the motor 8. The circuitry 36 can also control the modulator 4 via modulator control circuitry 34. Such circuitry is well known. The scanner 5 includes a digital to analog converter 24 which provides a Y-axis signal via amplifier 26 and a digital to analog converter 28 which provides an X-axis signal via amplifier 30. The signals from amplifiers 26 and 30 control x-axis and y-axis scanning devices 20 and 22 respectively which position a mirror 42 which reflects the modulated light beam from the laser 7.

In operation, a light beam from the laser 7 is modulated by the externally controllable modulator 4 to provide a modulated beam 3 which strikes the x-y scanner 5, the latter having an externally controllable scanning rate as determined by signals on the scanner bus and the control bus of FIGURE 2. The scanner 5 scans the light beam in an x-y plane via the mirror 42 onto the rotating screen 1, the speed of rotation of the screen 1 being synchronized to the scanning rate of the scanner 5 as explained hereinabove. As has been explained hereinabove, any point of light in the x-y plane impinging upon the screen 1 will impinge upon one or both of the members 9 and 10, depending upon the angle of the beam 6 with the screen 1 and the angle of the member 10 with the member 9 and will display a harmonic type motion in the z-plane due to the similar movement of points on the screen. Accordingly, if the scanning rate of the scanner and the rotation rate of the screen are sufficiently high, light impinging upon the screen at any point on the screen will move along the z-axis sufficiently rapidly to appear as a complete line, as is well known. The result is a three dimensional display with height determined by the angle of the screen. The second light source composed of laser 7′, modulator 4′ and scanner 5′ provides an image on the surfaces 9 and/or 10 in the same manner as described hereinabove for the first light source.

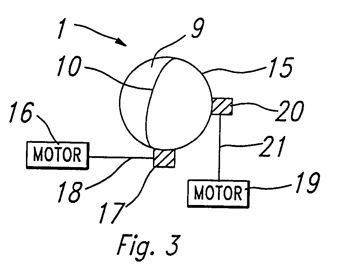

In accordance with a second version of the first embodiment of the invention, as shown in FIGURE 3, the screen 1 is substantially the same as described hereinabove, however the screen is encased within a light transmissive spherical enclosure 15, the enclosure being mounted against any translational motion by being a disk which is mounted at its edges in a clear sphere or in a solid acrylic material which is sectioned and reattached with the disk therein, the screen being capable of only rotational motion about its center. This rotational motion in two different directions is provided by means of a pair of motors 16 and 19, each motor driving a motive element in the form of a gear or frictional element 17 and 20 via a shaft 18 and 21. THe gears or frictional elements 17 and 20 each abuts the enclosure 15 and rotate the enclosure in a different direction, preferably orthogonal to each other. The motors 16 and 21 are individually controlled as to speed of rotation by external devices of well known construction (not shown) and can be, for example, stepping motors.

## Claims

1. A three dimensional display system comprising:
(a) a light source (7) for generating a light beam,
(b) means (4, 5) for forming an image in a predetermined x-y plane by scanning and modulating said light beam and transmitting said image along a predetermined axis passing though said x-y plane; and
(c) a continuously rotating screen (1) having an axis of rotation along said predetermined axis for receiving and displaying said image, said screen (1) being rotatable about said predetermined axis and having a first screen surface (9) which, in all of its instantaneous states, has contiguous portions thereof at progressively different distances from said x-y plane, characterized in that said screen (1) has a second screen surface (10) intersecting said first surface.

2. A display system as set forth in claim 1, wherein said first surface (9) is a planar surface.

3. A display system as set forth in claim 2, wherein said second surface (10) makes an acute angle with a line normal to said x-y plane.

4. A display system as set forth in claims 1, 2, or 3, further including means (4) to control the intensity of said light beam.

5. A display system as set forth in claims 1, 2, 3, or 4 further including means (36) to control the speed of rotation of said screen and the scanning rate of said image forming means (5) to scan relative to each other.

6. A display system as set forth in claims 1, 4, or 5, further including a second light source (71) for generating a second light beam and means (51) to direct said second light beam onto said second surface.

## Patentansprüche

1. Dreidimensionales Anzeigesystem, enthaltend:
(a) eine Lichtquelle (7) zum Erzeugen eines Lichtstrahlenbündels,
(b) Mittel (4, 5) zum Erzeugen eines Bildes in einer vorbestimmten x-y-Ebene durch Abtasten und Modulieren des Lichtstrahlenbündels und zum Übertragen des Bildes längs einer vorbestimmten Achse, die durch die x-y-Ebene verläuft; und
(c) einen sich kontinuierlich drehenden Bildschirm (1) mit einer längs der vorbestimmten Achse verlaufenden Drehachse für den Empfang und die Wiedergabe des Bildes, wobei der Bildschirm (1) um die vorbestimmte Achse drehbar ist und eine erste Bildschirmfläche (9) aufweist, die in allen ihren Momentanzuständen zusammenhängende Abschnitte in fortlaufend unterschiedlichen Abständen von der x-y-Ebene hat,
dadurch gekennzeichnet, daß der Bildschirm (1) eine zweite Bildschirmfläche (10) aufweist, die die erste Fläche schneidet.

2. Anzeigesystem nach Anspruch 1, bei welchem die erste Fläche (9) eine ebene Fläche ist.

3. Anzeigesystem nach Anspruch 2, bei welchem die zweite Fläche (10) mit einer zur x-y-Ebene senkrechten Linie einen spitzen Winkel bildet.

4. Anzeigesystem nach Anspruch 1, 2 oder 3, ferner enthaltend Mittel (4) zum Steuern der Intensität des Lichtstrahlenbündels.

5. Anzeigesystem nach Anspruch 1, 2, 3 oder 4, ferner enthaltend Mittel (36) zum Steuern der Drehgeschwindigkeit des Bildschirms und der Abtastrate der Bilderzeugungsmittel (5) zur Erzielung einer Abtastung relativ zueinander.

6. Anzeigesystem nach Anspruch 1, 4 oder 5, ferner enthaltend eine zweite Lichtquelle (71) zum Erzeugen eines zweiten Lichtstrahlenbündels und Mittel (51) zum Lenken des zweiten Lichtstrahlenbündels auf die zweite Fläche.

## Revendications

1. Système d'affichage à trois dimensions comprenant :
a) une source de lumière (7) pour engendrer un faisceau de lumière,
b) des moyens (4,5) pour former une image dans un plan X-Y prédéterminé en balayant et en modulant ledit faisceau de lumière et en transmettant ladite image le long d'un axe prédéterminé passant à travers ledit plan X-Y, et
c) un écran (1) rotatif de manière continue ayant un axe de rotation le long dudit axe prédéterminé pour recevoir et afficher ladite image, ledit écran (1) étant rotatif autour dudit axe prédéterminé et ayant une première surface d'écran (9) qui, dans tous ses états instantanés, possède des portions contigues de celle-ci à des distances progressivement différentes dudit plan X-Y, caractérisé en ce que ledit écran (1) a une seconde surface d'écran (10) croisant ladite première surface.

2. Système selon la revendication 1, dans lequel ladite première surface (9) est une surface plane.

3. Système selon la revendication 2, dans lequel ladite seconde surface (10) fait un angle aigu avec une ligne normale audit plan X-Y.

4. Système selon la revendication 1, 2 ou 3, comprenant en outre des moyens (4) pour commander l'intensité dudit faisceau de lumière.

5. Système selon la revendication 1,2,3 ou 4, comprenant en outre des moyens (36) pour commander la vitesse de rotation dudit écran et le rythme de balayage desdits moyens de formation d'image (5) pour balayer relativement l'un par rapport à l'autre.

6. Système selon la revendication 1,4 ou 5, comprenant en outre une seconde source de lumière (71) pour engendrer un second faisceau de lumière et des moyens (51) pour diriger ledit second faisceau de lumière sur ladite seconde surface.
